# EUROPEAN PATENT SPECIFICATION

(11) **EP 2 418 425 B1**
(45) Date of publication and mention of the grant of the patent: **02.01.2013**
(21) Application number: 10008340.1
(22) Date of filing: 10.08.2010
(51) Int. Cl.: F23G 7/07, F24B 1/00, B01D 53/86

(54) **Device for treating exhaust gases from a small heating system**
Vorrichtung zur Behandlung von Abgasen aus einem Kleinheizsystem
Dispositif pour traiter les gaz d'échappement d'un petit système de chauffage

(43) Date of publication of application: 15.02.2012
(73) Proprietor: Dr. Pley Environmental GmbH, 96052 Bamberg (DE)
(72) Inventor: Pley, Martin, 69117 Memmelsdorf (DE)
(74) Representative: Ricker, Mathias

(56) References cited:
- EP-A2- 2 166 287
- US-A- 3 043 245
- US-A- 4 363 785
- US-A- 4 400 356
- US-A- 5 919 425

## Description

### Field of the Invention

The invention relates to a device comprising a catalytic device for treating exhaust gases from a heating system, particularly exhaust gases from a small heating system in a private household, to an apparatus comprising said device, to a heating system comprising said device or apparatus, to a process for the manufacture and/or regeneration of such device, and to the use of the device and apparatus for treating the exhaust gases from a heating system.

### Background of the Invention

Small heating systems, also termed as small combustion systems, which are operated with solid fuel such as wood, wood pellets, or carbon such as coal or brown coal, may often be found in private households, where they complete or replace traditional heating systems. In the Federal Republic of Germany, the allowed emissions of these small heating systems are regulated, due to the low thermal output of said systems, by the First Federal Immission Protection Ordinance (1. BimSchV), which was modified by a decision of the German Bundestag in December 3, 2009. In this 1. BImSchV, small and medium heating systems are regulated. Heating systems and heating systems for single rooms such as wood-burning stoves, tile stoves, cookers and opened fire places have to be mentioned among other systems. Said systems need not be approved by governmental regulations. Alone in Germany, about 15 millions of small heating systems are in use, with increasing tendency. Typical emissions of modern wood-burning stoves or wood burning fire place inserts are approx. 60 mg/Nm³ for particulate matter, and approx. 1500 mg/Nm³ for carbon monoxide. Short-chained organic compounds are also emitted, which mainly contribute to odor formation.

Even if small heating systems are properly operated, in particular particulate matter, short-chained organic compounds, polycyclic aromatic hydrogen carbons (PAKs), and carbon monoxide are emitted. If improperly operated, e.g. combusting halogenated organic compounds such as PVC etc., highly toxic poly halogenated dibenzodioxins or dibenzofurans may be released.

The filtering or purification of exhaust gases from small heating systems by means of adequate devices is generally known. When developing small heating systems, the experts take particular care of process parameters, e.g. in order to adapt the combustion chamber and the air flow to an emission-free combustion by means of primary measures. It is also known to limit emissions by means of catalysts. Mostly, such catalysts are based on transition metals which, however, may be fastly deactivated due to the presence of catalyst poisons in the fuel such as arsenic, sulfur or phosphorus compounds. Said catalyst poisons may be found in traces (phosphorous and arsenic) or up to an amount of 1 % (sulfur), particularly in wood or in other solid fuels, which are preferably used in small heating systems.

### Object of the invention

One object of the present invention is to further reduce emissions from heating systems, preferably from small heating systems.

### Summary of the Invention

According to a first aspect, the invention relates to a device for treating exhaust gases from a heating system, preferably a small heating system, particularly a small heating system used in private households, comprising:
a catalytic device comprising a catalytically active material,
wherein the catalytically active material is a ceramic by means of which an oxidation of exhaust compounds is catalyzable; and
wherein the catalytic device comprises a plurality of apertures through which the exhaust gases flow; Even if small heating systems are property operated, in particular particulate matter, short-chained organic compounds, polycyclic aromatic hydrogen carbons (PAKs), and carbon monoxide are emitted. If improperly operated, e.g. combusting halogenated organic compounds such as PVC etc., highly toxic poly halogenated dibenzodioxins or dibenzofurans may be released.

The filtering or purification of exhaust gases from small heating systems by means of adequate devices is generally known:

When developing small heating systems, the experts take particular care of process parameters, e.g. in order to adapt the combustion chamber and the air flow to an emission-free combustion by means of primary measures, like disclosed in EP 2 166 287 A. There, a heating system is disclosed which includes a filter having a catalytic coating. The filter has a foam structure or a sponge-like structure having pores. A similar filter system is disclosed in US 5 919 425 B, wherein the catalyst is manufactured by using packing materials which have a micro surface structure characterized by the BET specific surface and the porosity.

It is also known to limit emissions by means of catalysts. Mostly, such catalysts are based on transition metals which, however, may be fastly deactivated due to the presence of catalyst poisons in the fuel such as arsenic, sulfur or phosphorus compounds. Said catalyst poisons may be found in traces (phosphorous and arsenic) or up to an amount of 1 % (sulfur), particularly in wood or in other solid fuels, which are preferably used in small heating systems. I. e. US 4 400 356 discloses a catalytic combustor bed configuration wherein the catalyst bed comprises a layer of fully catalyst impregnated particles, followed by a layer of particles which have an catalyst impregnated surface and another layer, which consists of particles not impregnated with catalyst. The whole catalyst bed is hold in a support which does not have an upper screen. In US 4 363 785 a catalytic converter comprising ceramic plates for a wood burning stove is disclosed, which are supported by the bottom walls of the wood burning stove. In order to combust incompletely burned substances heated, fresh air is supplied to the ceramic plates.

### Object of the invention

One object of the present invention is to further reduce emissions from heating systems, preferably from small heating systems.

### Summary of the Invention

According to a first aspect, the invention relates to a device for treating exhaust gases from a heating system, preferably a small heating system, particularly a small heating system used in private households, comprising:
a catalytic device comprising a catalytically active material,
wherein the catalytically active material is a ceramic by means of which an oxidation of exhaust compounds is catalyzable; and
wherein the catalytic device comprises a plurality of apertures through which the exhaust gases flow;
characterized in that the catalytic device comprises a bulk material comprising a plurality of bulky components.

In one embodiment, said ceramic is not a foam ceramic or does not comprise a foam ceramic.

In one embodiment, the device is characterized in that a plurality of said bulky components comprises said catalytically active material.

In one embodiment, the device is characterized in that said bulky components have one or more predetermined external shapes, which are preferably selected from the group of shapes comprising or consisting of: rings, cylinders, cones, saddles, spheres, ellipsoids, cuboids, cubes, polyeders, plates, rods, or other shapes or cuts, or combinations of these shapes.

In one embodiment, the device is characterized in that said bulk material is provided in the form of a fixed bed, which comprises bulky components.

In one embodiment, the device is characterized in that said ceramic is a technical ceramic and comprises one or more of the following: titanium oxide(s), tungsten oxide(s), molybdenum oxide(s), cordierite, corundum, in particular TiO₂, WO₃, MoO₃, ZrO₂, CeO₂, and/or Al₂O₃.

In one embodiment, the device is characterized in that the catalytically active material comprises platinum and palladium, or platinum or palladium.

In one embodiment, the device further comprises Al₂O₃.

In one embodiment, the device is characterized in that the catalytically active material comprises TiO₂ and V₂O₅.

In one embodiment, the device is characterized in that the catalytically active material comprises comprises TiO₂ and V₂O₅ such that a disordered anatase is formed where less than 3.2 % or less than 2 % Ti⁴⁺ is replaced by V⁵⁺.

In one embodiment, the device is characterized in that the catalytically active material comprises gold.

In one embodiment, the device is characterized in that the catalytically active material is regenerated in case of a deactivation.

In one embodiment, the device is characterized in that it comprises a supporting device for supporting the catalytically active material.

According to a second aspect, the invention relates to an apparatus for treating exhaust gases from a heating system, preferably a small heating system, particularly a small heating system used in private households, comprising:
a housing comprising a bottom and a cover;
at least one, preferably two devices according to the first aspect of the invention or according to any one of the embodiments according to the first aspect of the invention, which are arranged within the housing between said bottom and cover;
wherein the bottom of the apparatus has an opening through which exhaust gas is fed from the small heating system into the apparatus.

In one embodiment, the apparatus further comprises a flap or door for maintenance or which facilitates maintenance.

In one embodiment, the apparatus is characterized in that it comprises up to 10, preferably up to 6 of the devices according to the first aspect of the invention and/or embodiments thereof.

In one embodiment, the apparatus is characterized in that said devices are detachably attached at the housing wall.

In one embodiment, the apparatus is characterized in that said devices are alternatingly attached at two opposing surfaces of the housing.

In one embodiment of the apparatus, the devices according to the invention comprise a supporting device for supporting the catalytic device, wherein the supporting device comprises a frame and an upper and a lower grid-like plate, wherein said bulk material is arranged between the grid-like plates and the frame.

In one embodiment, the apparatus is characterized in that the grid-like plates are arranged such that they enclose an angle of from 60 to 90 ° or from 90 to 120 ° with the flow direction of the exhaust gas.

In one embodiment, the apparatus is characterized in that the apparatus comprises at least one absorbing device for absorbing one or more catalyst poisons.

In one embodiment, the apparatus is characterized in that said apparatus comprises at least one device for oxidizing one or more of the following: carbon monoxide, hydrocarbons, formaldehyde, dioxins, and/or furans; and/or at least one device for converting nitrogen oxides to nitrogen; and/or at least one device for removing mercury.

In one embodiment, the apparatus is characterized in that the apparatus is located in the interior of the small heating system.

According to a third aspect, the invention relates to a heating system, preferably a small heating system, comprising:
a combustion chamber;
an exhaust gas duct for guiding exhaust gases to a discharge duct; and
the device according to the invention; or the apparatus according to the invention;
characterized in that said device or said apparatus is/are arranged in the exhaust gas duct or the discharge duct such that the gas temperature of the exhaust gas, which reaches said device or said apparatus, is from 150°C to 800 °C, or from 180°C to 600 °C, or from 180°C to 450 °C.

In one embodiment, the small heating system is characterized in that it is operated with a solid fuel, particularly with biomass such as wood or wood pellets or crops or nutmegs; or with carbon such as coal or brown coal; or with gas such as natural gas, or biogas, or town gas.

According to a fourth aspect, the invention relates to a method of manufacturing a device according to the invention, comprising the steps of:
- providing a supporting device for supporting a catalytic device, which comprises a catalytically active material, wherein the catalytically active material is a technical ceramic by means of which an oxidation of the exhaust gas compounds is catalyzable; and
- arranging the catalytically active material at the supporting device and providing the catalytic device such that the catalyst device comprises a plurality of apertures through which the exhaust gases flow.

According to a fifth aspect, the invention relates to a method of regenerating the device according to the invention, or a method of regenerating the apparatus according to the invention, comprising one or more of the following steps: mechanically cleaning the catalytic device or the catalytically active material e.g. by means of an ultrasonic treatment; or by means of a solvent; or by treating with an agent for increasing the catalytic properties of the catalytically active material.

According to a sixth aspect, the invention relates to a method of treating the exhaust gases from a heating system, preferably a small heating system, comprising a device according to the invention, or comprising an apparatus according to the invention, comprising:
arranging the device or the apparatus in the exhaust gas flow.

According to a seventh aspect, the invention relates to a use of a device according to the invention, or use of the apparatus according to the invention for treating exhaust gases of a heating system.

According to an eighth aspect, the invention relates to a use of a device according to the invention, wherein the device comprises as catalytically active material platinum and/or palladium, and optionally Al₂O₃, or use of an apparatus according to the invention comprising the device according to the invention, wherein the device comprises as catalytically active material platinum and/or palladium, and optionally Al₂O₃, for oxidizing one or more of the following gases, which are contained in an exhaust gas from a heating system: carbon monoxide, hydrocarbons, formaldehyde, dioxins, furans.

According to a ninth aspect, the invention relates to the use of a device according to the invention, wherein the device is characterized in that the catalytically active material comprises TiO₂ and V₂O₅, wherein preferably the catalytically active material comprises a disordered anatase where less than 3.2 % or less than 2 % Ti⁴⁺ is replaced by V⁵⁺, or use of an apparatus according to the invention, which comprises the device according to the invention, wherein the device is characterized in that the catalytically active material comprises TiO₂ and V₂O₅, wherein preferably the catalytically active material comprises a disordered anatase where less than3.2 % or less than 2 % Ti⁴⁺ is replaced by V⁵⁺, for converting nitrogen oxides, which are contained in the exhaust gas from a heating system, to nitrogen.

According to a tenth aspect, the invention relates to the use of a device according to the invention, wherein the catalytically active material comprises gold, or use of an apparatus according to the invention, which comprises the device according to the invention, wherein the catalytically active material comprises gold, for removing mercury, which is contained in the exhaust gas from a heating system.

### Detailed discussion of the Invention

The object of the invention is achieved with a device for treating the exhaust gases from a heating system, preferably from a small heating system, particularly a small heating system used in private households, and/or with an apparatus comprising said device, comprising:
a catalytic device comprising a catalytically active material;
wherein the catalytically active material is a ceramic by means of which an oxidation of exhaust compounds is catalyzable; and
wherein the catalytic device comprises a plurality of apertures through which the exhaust gases flow.

In one embodiment, said ceramic is not a foam ceramic or does not comprise a foam ceramic.

The term "heating system" as used for the purpose of this disclosure encompasses any heating system or combustion system, preferably a small heating (combustion) system, a medium heating (combustion) system, or a large heating (combustion) system, in which exhaust gases may be formed.

In one embodiment, the heating system is a small heating system, which in turn is a small heating system in the meaning of the 1. BlmSchV of December 3, 2009. In another embodiment, it is also possible and also preferred that thea small heating system is a medium heating system (medium combustion system) in the meaning of the 1. BlmSchV of December 3, 2009. In particular, a small heating system is a system having a nominal heating performance preferably of from 4 kW to 500 kW, e.g. of from 4 kW to 100 kW, or of from 4 kW to 30 kW, or of from 100 kW to 500 kW. Such small heating system may particularly be found in houses of private households, but may also be used elsewise.

In still another embodiment, the device according to the invention may also be used for treating the exhaust gases of industrial facilities, i.e. the exhaust gases of large heating systems or large combustion systems.

A heating system, preferably a small heating system, is preferably operated with solid fuels, in particular biomass such as wood or wood pellets, or crops, or nutmegs, and the like; or carbon such as coal or brown coal. It is also possible and preferred that the heating system is operated with gas such as natural gas, town gas or biogas, and the like.

The heating system such as a small heating system preferably comprises a combustion chamber and an exhaust gas duct, which receives the exhaust gas from the combustion chamber and directs it to a discharge duct, e.g. a chimney. Preferably, the device according to the invention is used for treating the exhaust gases from the small heating system or the medium heating system or even the large heating system. The device according to the invention is preferably arranged in the exhaust gas duct or the discharge duct such that the gas temperature of the exhaust gas, which reaches the device, is from 150°C to 800 °C, e.g. 150°C to 600 °C, or 180°C to 450 °C. Thereby, an optimal operating temperature of the device is achieved such that preferably a cleaning efficiency, in particular a catalytic effect of the device, proceeds better than at temperatures, which are outside of that range.

Preferably, the small heating system is realized such that the device according to the invention is arranged in a manner that a cross-section opening of the exhaust gas duct or the discharge duct is at least partially covered such that the exhaust gas flow is at least partially guided through the device. If a part of the cross-section opening remains uncovered, the flue of the exhaust gas flow is improved, which may be important for an accurate handling of the small heating system. Preferably, an adjusting device is provided at the small heating system by means of which the position of the device in the exhaust gas duct or the discharge duct may be changed in order to adjust the intensity of the exhaust gas flow, respectively the pressure loss of the exhaust gases in the exhaust gas flow by means of the device. Thereby, e.g. during the heat-up phase of the exhaust gas, the device can cover a smaller cross-section opening than in a phase of higher exhaust gas temperature, in particular from 150°C to 800 °C, or from 250°C to 600 °C, during which the device can cover a larger cross-section opening. Preferably, said adjusting device is realized such that it may be operated manually and/or automatically. An electronic control device may be provided by means of which particularly the function of the adjusting device may be controlled, e.g. may be temperature-controlled by means of optional temperature sensors, or may be controlled by means of a time switch. Thus, the operation of the small heating system may be improved.

However, it is also preferred that the small heating system is realized such, or that the device is arranged such that the cross-section opening of the exhaust gas duct or the discharge duct of the device, in particular at least during the operation of the small heating system, is completely covered such that the exhaust gas flow substantially is completely guided through the device. This has the advantage that the exhaust gas flow substantially is permanently filtered, particularly also during ignition phases of the small heating system during which the emission values are particularly high, and a filtering may be particularly efficient.

The device according to the invention preferably comprises means or characteristics by means of which the pressure drop in the exhaust gas flow across the device is smaller than 50 Pa if the device is arranged in the exhaust gas flow of a small heating system. Thus, the preferred realization of the device is achieved with the small heating system in which no additional means are necessary in order to counteract the reduction of the exhaust gas flow, which is generated by the positioning of the device within the exhaust gas flow. Basically, it is possible to let work a ventilator, e.g. an induced draft blower, within the exhaust gas duct, or in the discharge duct, in order to increase the exhaust gas flow. Thereby, however, the operation is more complex and more fault-prone. Preferably, the cross-section openings of the catalytic device are chosen such that the pressure drop in the exhaust gas flow across the catalytic device preferably is less than 50 Pa, 40 Pa, 30 Pa, 20 Pa or 10 Pa, respectively, if the device is arranged in the exhaust gas flow of a small heating system. Preferably, the device is realized such and/or in particular the apertures of the catalytic device are realized such that due to the arrangement thereof in the exhaust gas flow of a small heating system, a pressure drop across the device is generated which, however, is small enough to effect an error-free operation of the small heating system, in particular without e.g. requiring an additional blower for increasing the exhaust gas flow. Due to a lower pressure drop, the heating of a small heating system can be run more flexible, in particular can be kept in an operation range, which has less emissions and, at least indirectly, also the filtering efficiency of the device, which may be temperature-dependent, may be improved.

Preferably, the device is realized such that a cross-sectional area of the device, which is perpendicularly orientated to the exhaust gas flow, preferably is larger by a factor than that of the exhaust gas duct or the discharge duct, e.g. the chimneys, if the device or the small heating system is connected by means of this device to an exhaust gas duct or a discharge duct. This cross-sectional area is preferably defined such that it overlaps both ceramic parts of the device and also the apertures of the device. Preferably, this cross-sectional area is an area, which is framed by a frame of the optional supporting device of the device. This factor is, each preferably, a value of from 1 to 5, or from 5 to 10, or from 10 to 15, or from 15 to 20, or from 25 to 50, or is preferably larger. Preferably, this cross-sectional area is realized such, in particular by means of an adequate choice of this factor, that the pressure drop, which is effected by means of the device, within the exhaust gas flow in an exhaust gas duct or a discharge duct preferably is reduced by 50 % to 75 %, or preferably by 75 % to 100 %.

However, depending on requirements with regard to the filtering efficiency, and the mandatory pressure drop, which is related thereto, a device for increasing the exhaust gas flow may be provided, e.g. an induced draft blower, which influences the exhaust gas flow.

The small heating system according to the invention is preferably suitable or realized to be connected to a central heating which, e.g., serves for the heating of a household or multiple household in a one party house or a multiparty house.

The catalytic device of the device preferably comprises a catalytically active material, wherein the catalytically active material is a ceramic, preferably a technical ceramic (ceramics) by means of which, in particular, an oxidation of the exhaust gas compounds is catalyzable. A technical ceramic encompasses in particular ceramic materials, which have been optimized with regard to their characteristics to technical applications. This ceramic is preferably a technical ceramic and/or is preferably a not naturally occurring ceramic. However, it is also possible that the catalytic device comprises parts of naturally occurring ceramic or consists of said ceramic.

The catalytic device comprises a plurality of apertures through which the exhaust gas can flow. Preferably, the apertures comprise an average cross-section of from 0.1 to 0.5 cm, preferably of from 0.50 cm to 2.0 cm, and preferably of from 2.0 cm to 4.0 cm. Said cross-section openings may be measured or estimated by means of e.g. cut pictures or other imaging techniques. By means of the adjustment of the diameter of the apertures, the pressure drop across the device is preferably adjusted, if the device is arranged in the exhaust gas flow from or of a small heating system. Within the mentioned size ranges, in particular for cross-section openings of from 0.50 cm to 2.0 cm, the pressure drop is in an optimal range such that a sufficient draft with a good filtering efficiency may be achieved.

Preferably, the catalytic device comprises a bulk material comprising a plurality of bulky components, or consists partially or completely of bulky components. The term "bulk material" encompasses a mixture of solid particles (granular material), which are loosely mixed or compactly grouted or bonded. Arrangements of solid particles "loose material" and "pile" are encompassed by the term "bulk material". A German term for an arrangement of such solid particles is "Haufwerk". A bulk material comprising loosely mixed bulky components may also be arranged as "fixed bed". The use of a bulk material has the advantage that the apertures of the catalytic device need not artificially be generate, since they are already present. The clearance between the bulky components, also termed "interstice", form said apertures. It is another advantage of the bulk material that almost any geometrical external shape of a catalytic device may be generated. This facilitates the manufacture of a device, which is adapted to dedicated small heating systems, and is easily to design for small heating systems, which are already available on the market.

Accordingly, in one aspect, the invention relates to a device for treating the exhaust gases from a heating system, preferably from a small heating system, particularly a small heating system used in private households, comprising:
a catalytic device comprising a catalytically active material;
wherein the catalytically active material is a ceramic by means of which an oxidation of exhaust compounds is catalyzable; and
wherein the catalytic device comprises a plurality of apertures through which the exhaust gases may flow;
characterized in that the catalytic device comprises a bulk material comprising a plurality of bulky components.

Advantageously, the interstices or the apertures, respectively the average cross-section opening thereof, may be influenced by means of the external geometric shape and/or by means of the volume of the bulky components. Preferably, the bulky components comprise an average cross-section diameter in the range of from 0.2 to 0.5 cm, particularly preferred of from 0.5 cm to 5.0 cm, or preferably of from 5.0 to 20 cm, or another value, in particular in case of an assumed or realistic external sphere shape. Thus, in this manner, the pressure drop may be influenced, particularly may be better planned, calculated and/or adjusted. Particularly preferred, the bulky components therefore comprise a predetermined external shape, which is not random, which, for example, may be generated by means of one or more additional process steps for the provision or manufacture of the catalytic device. However, it is also possible that the bulky components comprise a random external shape, wherein in particular the manufacture thereof is less complex.

Preferably, a plurality of the bulky components comprises this catalytically active material. Preferably, substantially all bulky components of the catalytic device comprise said catalytically active material, wherein the catalytic effect is increased. However, it is also within the present invention that only a part of the bulky components comprise the catalytically active material. For example, a proximally arranged first region of the catalytic device, i.e., in direction of the exhaust gas flow entering the device, may be provided, which comprises no or only few catalytically active material, and a distally arranged second region of the catalytic device, which thus is arranged in direction of the exhaust gas flow exiting the device. Said first region controls a temperature being preferably high enough to allow the burning of particulate matter to a high degree, in particular up from 50 to 80 % or from 80 to 95 %, or to allow the substantially completely burning of particulate matter, wherein the emission of the particulate matter may be particularly effectively reduced, and the temperature for the subsequent catalytic conversion in the second region may be reduced.

Preferably, the bulky components comprise one or more predetermined shapes preferably selected from a group of shapes comprising: rings, cylinders, cones, saddles, spheres, ellipsoids, cuboids, cubes, polyeders, plates, rods or other shapes or cuts or combinations of those shapes. Particularly, a rod is a shape the length thereof is larger than the height and depth thereof, preferably twice as large. In particular, a plate is a shape the length and depth thereof are larger than the height thereof, preferably twice as large. Preferably, the shape of a plurality, of a majority or of all bulky components of the catalytic device is chosen such that the pressure drop in the exhaust gas flow across the catalytic device is less than 50 Pa, if the device is arranged in the exhaust gas flow of a small heating system. Preferably, at least a first portion of the bulky components essentially comprises the same first shape and/or essentially the same first volume and/or essentially the same mass. Preferably, this first portion is 50 % of the bulky components, wherein preferably a second portion of up to 50 % of the bulky components essentially comprises at least a second form and/or essentially at least a second volume and/or at least essentially a second mass, wherein preferably the first and the second form, the first and the second volume and the first and the second mass are substantially different from each other. Preferably, this first portion is from 95 % up to 100 %, in particular essentially 100 % of the bulky components.

In one embodiment, the bulk material is provided in the form of a fixed bed, which comprises said bulky components. Thereby, the bulky components may be mixed such, e.g. by pouring, that they coexist side by side or on top of each other. An optional, additional manufacturing step in which, particularly the bulky components perform oscillating or vibrating movements after the pouring, may further change the arrangement of the bulky components, particularly may improve the arrangement with respect to storage stability. In particular, a packing of bulky components may be generated, in which the bulky components are arranged at least in sections or are completely arranged in a regular manner, e.g. in a spatial lattice, the lattice points of which are arranged in sections or are completely periodically arranged. The generated packing, in particular the density and the resulting interstices thereof, in particular the one or several average cross-section opening(s) may be thereby changed respectively adjusted. For instance, bulky components in the form of rods will arrange in one or more stacks, which is caused by self-organization. A stack preferably has the property that it comprises in longitudinal direction of the elongated elements a smaller cross-section density and a larger average cross-section opening than in direction, which is perpendicular thereto, since in the plane, which is perpendicular to the longitudinal direction, a higher quantity density of apertures is developed. Furthermore, by using different main types of bulky components, e.g. by using spheres having 4 cm and spheres having 0.5 cm, a bulk material may be generated, which has other flow through properties than a bulk material, which comprises just one type or a higher plurality of types by changing the average cross-section opening of the bulk material. The clearances of the larger spheres may, for example, be occupied by the smaller spheres, which diminishes the average cross-section opening of the bulk material comprising larger spheres.

It is possible that the bulk material comprises bulky components, which are connected or bonded to each other by subjecting the bulky components after the pouring to a further processing step, in particular the bulky components are connected or bonded to each other, with or without the use of a binder.

Preferably, the catalytic device comprises a honeycomb element, the honeycombs thereof form said apertures, or comprises more honeycomb elements. The term "honeycomb element" encompasses an element, the external shape thereof has the form of a honeycomb, or which is in sections or continuously a honeycomb structure. Such honeycombs or such a honeycomb element may be provided by means of the formation of a starting material, or by means of casting a starting material, with or without the combination with a burning step or washing step, in which, for example, a lattice template, e.g. a textile, is dissolved such that only the casted starting material remains. The honeycomb element may particularly be generated by means of one bulk material, which, for example, may subsequently be sintered.

Preferably, the device, particularly the catalytically active ceramic, comprises titanium oxide(s), tungsten oxide(s), molybdenum oxide(s), cordierite, corundum, zirconium oxide(s), cerium oxide(s), silica, in particular TiO₂, WO₃, MoO₃, Al₂O₃, Ce₂O₃, or ZrO₂, or a mixture of at least two of these compounds, each preferably if possible, with a mass fraction of the ceramic of, in one embodiment at least, and in another embodiment at most, 0.01, 0.05, 0.10, 0.25, 0.5 or 0.75. It is also preferred that at least one or more of the compounds, e.g. TiO₂, WO₃, MoO₃, Al₂O₃, Ce₂O₃, or ZrO₂, preferably Al₂O₃, are not provided or are provided in the ceramic with a small mass fraction of from 0.000 to 0.1 or to 0.01 or 0.001. Furthermore, it is possible that the catalytically active ceramic is additionally doped with a metal or transition metal or a rare earth metal or more of these compounds, wherein in particular the catalytic oxidation may be further adjusted, particularly improved. Preferably, this metal is a noble metal or a transition metal, and is preferably platinum or rhodium, gold, copper, chromium, or another catalytically active transition metal or compound. Also cerium and indium can be used as doping compounds.

The ceramic preferably comprises a mass fraction of a titanium oxide, in particular TiO₂, which preferably is from 0.25 to 0.50, or preferably from 0.50 to 0.75, or preferably from 0.70 to 0.85, or from 0.85 and 0.97. It is further preferred that the ceramic comprises a mass fraction of an aluminum oxide, in particular Al₂O₃, which preferably is from 0.25 to 0.50 or preferably from 0.50 to 0.75, or preferably from 0.70 to 0.85, or from 0.85 and 0.97. Thereby, the catalytic effect of the ceramic is particularly effective.

Preferably, the catalytically active material catalyzes the conversion of carbon monoxide to carbon dioxide. Preferably, the catalytically active material catalyzes the cleavage of polyhalogenated dibenzodioxins and/or polyhalogenated dibenzofurans and the oxidation thereof. Preferably, the catalytically active material catalyzes the conversion of organic compounds, which may be contained in the exhaust gas, to carbon monoxide and carbon dioxide. Preferably, the catalytically active material catalyzes the conversion of polycyclic aromatic hydrocarbons (PAKs) to carbon monoxide and carbon dioxide. The catalytic device may provide the mentioned catalytic effects separately or in a combination, however, preferably, the catalytic device provides each of the mentioned catalytic effects. Preferably, the device provides the additional effect that particulate matter is burned at or in the catalytic device at least partially, and thus is filtered.

Preferably, a ceramic and/or a catalytically active ceramic of the catalytic device provides a porosity, the pores of which are preferably not identical with the apertures of the catalytic device. The pores may be micropores (smaller than 2 nm in diameter), mesopores (between 2 and 50 nm) or macropores (larger than 50 nm). Preferably, the pores are opened such that they preferably are easier to penetrate by the exhaust gases, in particular also convective, however, they may also be closed.

By means of the combination of several different materials, the function of the system may be adjusted to the typical exhaust gas conditions of a small heating system. Preferably, a ceramic is contained in a first, preferably proximally arranged layer of the catalytic device, which preferably comprises forms of sub-constituents, e.g. honeycomb sections or bulk material, having different, identical or in sections identical geometries, for example external shapes. By means of a porosity of the ceramic and thus the associated adhesive properties, non-oxidized solid of the flue gas (exhaust gas) may be adsorbed, and may be better oxidized due to the longer residence time in the hotter, proximal zone. In one or more further, in particular further distally arranged regions or layers, further ceramic material and/or catalytically active material may be provided within the catalytic device, for example the mentioned TiO₂, WO₃, MoO₃, Al₂O₃, Ce₂O₃, or ZrO₂. In particular by means of such an arrangement, the emission of particulate matter may be reduced down to 5 mg/Nm³, the emission of small-chained organic compounds down to 2 mg/Nm³, and that of carbon monoxide down to 10 mg/Nm³. In particular the prescriptive limit of the 1. BlmSchV of December 3, 2009 for the emission of substances, which are harmful to the environment or which are hazardous to health, may preferably be met or is even lower, preferably when using the device according to the invention, the apparatus according to the invention, the small heating system according to the invention, and the process for treating the exhaust gases of a small heating system according to the invention.

Preferably, for achieving a sufficient catalytic effect, no additives are necessary such as ammonia, which are fed to the exhaust gas, e.g. via spraying nozzles. Furthermore, for achieving a sufficient catalytic effect and/or filtering effect, preferably no electrically driven additional equipment such as electric filters or ventilators are necessary. The device or the small heating system, which is equipped with said device, however, may comprise electrical devices such as control devices, if necessary.

Preferably, the catalytically active material, particularly the material comprising TiO₂, WO₃, MoO₃, Al₂O₃, Ce₂O₃, or ZrO₂, may be regenerated in case of deactivation such to allow the reduction of production cost, respectively the supply costs of the device. Preferably, the ceramic is not a foam ceramic. Synonymous to foam ceramic, terms such as foam ceramics or foamy ceramics or ceramics foam are used for the purpose of the present disclosure. Initially, a foam ceramic is self-containedly regenerable by means of combustion such that no depositions remain. However, after a longer operation time the gross pores are clogged, and the reduction of particulate matter decreases. If the foamy ceramic is, for example, used in the lining of a combustion chamber of a small heating system, then it must be newly completely lined, if necessary, in order to recover the function thereof. However, it is possible that at least subsections, in particular distally arranged subsections of the catalytic device, may be made from foamy ceramic.

Preferably, the device comprises a supporting device to support the catalytically active material. Said supporting device is preferably made of a metal or comprises at least a metal, which comprises steel, iron, aluminum or other compounds, or may consist of them. Preferably, the supporting device is a casing in which the catalytically active material may be arranged or is arranged. By means of the use of a supporting device, particularly a metallic casing for the catalytic device, in particular in combination with a bulk material or a fixed bed comprising bulk material comprising bulky components, it is possible to adjust the device to the place of installation without large expenses by means of adjusting the geometry. Due to the change of geometry according to the requirements, a further optimization of the catalytic activity under optimization of the pressure drop can be conducted. The whole device or the catalytic device may preferably be removed from the combustion system after a defined operation time, and preferably may be regenerated or replaced by a new module. Thereby, the replacement is very simple and cost-effective. Preferably, the supporting device comprises a casing, which comprises an opening for filling the catalytically active material into the casing, wherein preferably a closure device for closing the opening is provided, for example a sliding lid or a hinged lid, which may comprise a locking device. Thereby, the device may be used even more flexible and possibly more cost-efficient.

In a further aspect, the invention relates to an apparatus for treating exhaust gases from a small heating system, preferably the small heating system according to the invention, comprising:
a housing comprising a bottom and a cover;
at least one device, preferably two devices according to the invention, which are arranged within the housing between said bottom and cover;
wherein the bottom of the apparatus has an opening through which exhaust gas is fed from the heating system into the apparatus.

In one embodiment, the apparatus comprises further a flap or door, such as a flap or door for maintenance, or for facilitating maintenance.

The geometry of the apparatus according to the invention may be freely selected. Preferably, it may have the shape of a polyeder or also of a cylinder. Preferably, polyeders are cubes or cuboids.

The dimensions of the apparatus are variable. In general, they depend on the dimensions of the small heating system or structural or aesthetic conditions.

The housing of the apparatus can be made from metal and/or ceramic. In one embodiment, the housing of the apparatus is a single wall. In another preferred embodiment, the housing of the apparatus is realized as a double wall, i.e., it can consist of several layers. Said layers can be in the form of a laminate or they can be spaced from each other. If the layers of the housing are spaced from each other, then the cavity which is formed between the layer can be completely or partially filled with a heat-insulating material. A realization in several walls comprising an insulation material may, for example, be meaningful if the heat flows through the housing wall of the apparatus has to be kept low, since, as a rule, the catalytic processes running in the apparatus require heat. In one embodiment, the housing is realized such that the maximal heat emission of the apparatus is 15 kJ/(s x m²).

Within the apparatus is at least one, preferably at least two devices according to the invention, which each comprise a catalytic device comprising a catalytically active material from ceramic according to the invention. In one embodiment, the apparatus accommodates ten of said devices, preferably up to six devices.

The catalytic devices, which are used in the individual devices according to the invention, can be the same or can be different from each other. In one embodiment, within the catalytic devices of the devices according to the invention, the same active materials can be used. In a further embodiment, within the catalytic devices of the devices according to the invention, different materials are used.

The devices according to the invention are arranged within the housing of the apparatus in a manner that they can be removed from said apparatus. Then, they may be replaced by new, respectively regenerated devices according to the invention.

Preferably, the devices are attached at the housing wall within the interior of the housing such that they can be removed.

In one embodiment, said devices according to the invention are alternatingly attached at two surfaces of the housing, which oppose each other, preferably at lateral surfaces of the housing.

This may be effected thereby that the apparatus comprises suitable supporting means for the devices. Preferred supporting means are preferably hooks at which the devices may be attached, or bars on which the supporting devices may be applied.

The apparatus is also characterized in that the devices, which are within said apparatus, comprise a supporting device for supporting the catalytic device. In one embodiment, the supporting device comprises a frame and an upper and lower grid-like plate, wherein said catalytic device comprising said bulk material is arranged between the grid-like plates and the frame.

The devices, preferably in the form of a cassette or as cassettes, are preferably arranged within the apparatus between cover and bottom of the apparatus such that their largest areas enclose an angle of from 60 to 90 ° or from 90 to 120 ° with the flow direction of the exhaust gas (measured against clockwise direction from the surface of the cassette in direction of the flow direction of the exhaust gas).

A further embodiment is characterized in that the grid-like plates of the supporting device are arranged such that they enclose with the flow direction of the exhaust gas an angle between 60 and 90 ° or 90 to 120 °.

If the devices are preferably alternatingly arranged at two opposing (lateral) surfaces within the housing, then the grid-like plates of the devices, which are attached to the one surface, may enclose with the flow direction of the exhaust gas an angle between 60 and 90 °, and the grid-like plates of the devices, which are attached to the other surface, enclose an angle between 90 and 120 °.

In one embodiment, the largest surfaces of the devices are perpendicularly flown through by the exhaust gases. The devices may be variably dimensioned. In one embodiment, they are dimensioned such that they comprise as a maximum the largest cross-sectional area of the interior of the housing of the apparatus, or cover the largest cross-sectional area of the interior of the housing of the apparatus.

In a further embodiment, the grid-like plates are dimensioned such that they cover half of the cross-sectional area of the interior of the housing, respectively.

In one embodiment, in which the devices are alternatingly arranged as described above, the grid plates are dimensioned such that opposing devices overlay each other.

The apparatus is realized such that it preferably comprises a detachable cover. After the detachment from the housing, the devices may be removed from the housing.

Preferably, the cover is screwed at the housing of the apparatus. By detachment of the screws, it can be removed. A sealing between cover and housing, which should prevent the escape of exhaust gas, is preferably effected by means of a cord made from ceramic. In a further embodiment, also the bottom is detachable, preferably by means of a screw connection. Thereby, the exchange of the devices, which are within the interior of the housing, is further facilitated.

In one embodiment, the apparatus further comprises a door or a flap, such as a door or flap for facilitating maintenance.

In one embodiment, the apparatus comprises at least one absorbing device for absorbing one or more catalyst poisons. Such device may e.g. provided with basic calcium compounds.

In a further embodiment, the apparatus comprises at least one device for oxidizing one or more of the following: carbon monoxide, hydrocarbons, formaldehyde, dioxins, and/or furans; and/or at least one device for converting nitrogen oxides to nitrogen; and/or at least one device for removing mercury. Said devices may be arranged in the apparatus in any sequence.

In one embodiment, the device for adsorbing one or more catalyst poisons is arranged upstream of the at least one device for oxidizing one or more of the following: carbon monoxide, hydrocarbons, formaldehyde, dioxins, and/or furans; and/or at least one device for converting nitrogen oxides to nitrogen; and/or at least one device for removing mercury, i.e., the exhaust gas passes at first the device for adsorbing, and then any one of the other mentioned devices.

According to another aspect, the invention relates to a process for the manufacture of a device, in particular a device according to the invention, comprising the steps of:
- providing a supporting device for supporting a catalytic device, which comprises a catalytically active material, wherein the catalytically active material is a technical ceramic by means of which an oxidation of the exhaust gas compounds is catalyzable; and
- arranging the catalytically active material at the supporting device and providing the catalytic device such that the catalyst device comprises a plurality of apertures through which the exhaust gases may flow.

In one embodiment, the process further comprises the following steps, in any order:
- providing the catalytically active material as bulk material or as fixed bed comprising or consisting of individual bulky components;
- treating at least one portion or all bulky components of the bulk material of the catalytically active material such that said bulk material or said portion of bulk material comprises one or more geometrical external shapes, which may preferably be selected from a group of shapes or are shapes comprising rings, cylinders, cones, saddles, spheres, ellipsoids, cuboids, cubes, polyeders, plates, rods or other shapes or cuts or combination of these shapes.

In a further aspect, the invention also relates to a method of regenerating the catalytic devices, which are used in the device and the apparatus according to the invention.

The method according to the invention for regenerating the catalytic device of the device according to the invention or the apparatus according to the invention provides for the ability to increase the capability of the catalytically active material for catalyzing the oxidation of exhaust gas compounds due to the regeneration of the catalytic device. The method for regeneration may e.g. comprise the step of mechanically cleaning the catalytic device or the catalytically active material. The mechanical cleaning can comprise the step of an ultrasonic treatment of the catalytic device or of the catalytically active material, which thereby are preferably arranged in a solvent, which comprises organic (e.g. ethanol, DMF) or inorganic (e.g. water) components, or which consists substantially of said components. Furthermore, it may be provided that the catalytic device or the catalytically active material is treated in a further regeneration step with an agent for increasing the catalytic properties of the catalytically active material. This agent may comprise, for example, copper nitrate, platinum sulfate, or non-metal compounds.

The method according to the invention for treating the exhaust gases from a small heating system with the device according to the invention particularly provides that due to the arrangement of the device within the exhaust gas flow, the concentration of at least one compound of the exhaust gas is reduced, particularly is reduced due to a catalytically caused conversion of this compound by means of oxidation. This compound is preferably carbon monoxide, an organic compound such as a hydrocarbon or formaldehyde, PAK, polyhalogenated dibenzodioxin or dibenzofuran or preferably particulate matter.

The definitions of terms and explanation of components, means and effects are valid for all subject-matter according to the invention, i.e., the device, the small heating system comprising the device, the different mentioned methods if not mentioned otherwise or if it is not due to the context. Features of the subject-matters according to the invention and embodiments can be combined where possible or where it appears to be preferable.

Further preferred embodiments of the subject-matter according to the invention, i.e. the device, the small heating system comprising the device, the different mentioned processes, and the apparatus result from the following description of the examples in conjunction with the figures and the description thereof. Equivalent components of the examples are labeled substantially using equal reference numerals if not described otherwise or if not resulting from the context.

According to a further aspect, the invention relates to the use of a device according to the invention, or to the use of the apparatus according to the invention, for treating exhaust gases from a heating system, preferably a small heating system, or a medium heating system, or a large heating system.

In one embodiment, the invention relates to the use of a device according to the invention, and wherein the catalytic device comprises platinum and / or palladium, preferably in combination with Al₂O₃, or to the use of an apparatus according to the invention comprising the device according to the invention, wherein the device comprises platinum and / or palladium, preferably in combination with Al₂O₃, for oxidizing one or more of the following gases, which are contained in an exhaust gas from a heating system: carbon monoxide, hydrocarbons such as methane, formaldehyde, dioxines, furanes.

In another embodiment, the invention relates to the use of a device according to the invention, and wherein the catalytic device comprises TiO₂ and V₂O₅, or to the use of an apparatus according to the invention comprising the device according to the invention, and wherein the catalytic device comprises TiO₂ and V₂O₅, for converting nitrogen oxides, which are contained in the exhaust gas from a heating system, to nitrogen. In particular, a catalytic device is used which comprises a disordered anatase, wherein less than 3.2 %, e.g. less than 2 % Ti⁴⁺ is replaced by V⁵⁺.

In a further embodiment, the invention relates to the use of a device according to the invention, and wherein the catalytic device of the device according to the invention comprises gold, or to the use of an apparatus according to the invention, which comprises the device according to the invention, and wherein the catalytic device of said device comprises gold, for removing mercury, which is contained in the exhaust gas from a heating system.
Fig. 1 shows a cross-section of a first embodiment of the device according to the invention. Said device may be inserted into the apparatus according to the invention.
Fig. 2 shows a cross-section of a second embodiment of the device according to the invention. Said device may be inserted into the apparatus according to the invention.
Fig. 3 shows a schematical side view of an embodiment of a small heating system, which is equipped with the device of Fig. 1.
Fig. 4 shows an embodiment of the apparatus according to the invention in a cross-section.
Fig. 5 shows an embodiment of an exhaust gas duct of a small heating system according to the invention, which is equipped with the apparatus or the device according to the invention.
Fig. 6 shows a further embodiment of an exhaust gas duct of a small heating system according to the invention, which is equipped with the apparatus or the device according to the invention.

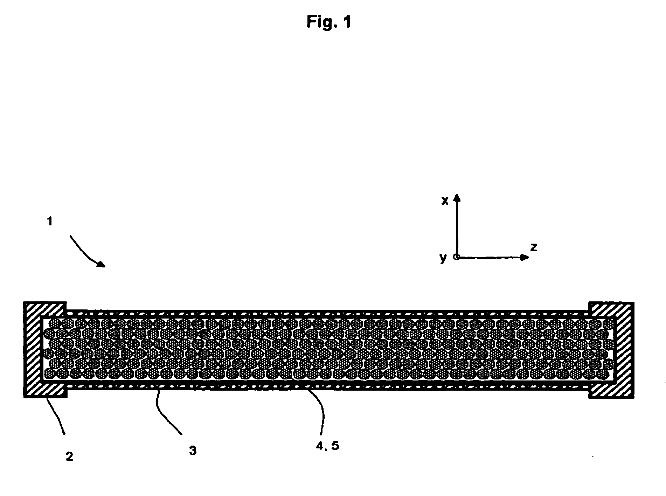

Fig. 1 shows a device for treating the exhaust gases from a small heating system, in particular a small heating system used in a private household. The device 1 comprises a supporting device in the form of a casing 2, 3, which comprises a metal frame 2 and an upper and lower grid-like casing plate 3, wherein the casing is formed such that it completely covers the cross-section of an exhaust gas duct of a defined type of a small heating system such that the whole exhaust gas must substantially flow through the device 1. The device 1 comprises a catalytic device 4 consisting of a fixed bed 5 of individual bulky components, which are densely packed, which, e.g., was achieved by means of vibrating the filled device 1. The packing 5 of the bulky components comprises a predetermined height, which corresponds to a multiple of the height of the spherical bulky components. The frame 2 is adapted such that it may support the plates 3 such that the packing 5 is framed in a force and frame locking manner by the casing 2, 3. The plates 3 are wide-meshedly realized such that the pressure drop of the exhaust gas flow, which is effected by the plates 3 of the casing, is lower by at least a factor 0.1, 0.1 or 0.001 than the pressure drop, which is effected by the packing 5. However, due to the relatively large cross-section of the apertures, respectively in this case the uniform average cross-section of the separate interstices between the spherical bulky components of the catalytic device 4, the pressure drop is selected such, respectively realized such that the pressure drop in the exhaust gas flow across the catalyst device 4 is lower than 50 Pa, i.e., averagely 10 Pa, if the device is arranged within the exhaust gas flow of a small heating system. Thereby, a small heating system, which is equipped with the device 1, particularly may be run error-free without an additional blower, which increases the exhaust gas flow (the draft) in order to compensate a reduction of the pressure. Since an additional blower causes costs, a cost-effective and effective reduction of emissions may be achieved in this manner.

The catalytically active material of the catalyst device 4 is a microporous, technical ceramic (ceramics) by means of which an oxidation of exhaust gas compounds is catalyzable. The ceramic comprises as catalytically active material TiO₂ (mass fraction 0.75), WO₃ (mass fraction 0.05) and V₂O₅ (mass fraction 0.05) as well as several other compounds. Particularly due to this arrangement, the emission of particulate matter may be reduced down to 9 mg/Nm³, the emission of small-chained organic compounds may be reduced down to 4 mg/Nm³, und those of carbon monoxide may be reduced down to 14 mg/Nm³. Particularly in inappropriate use, the catalyst device 4 may be recovered by means of regeneration.

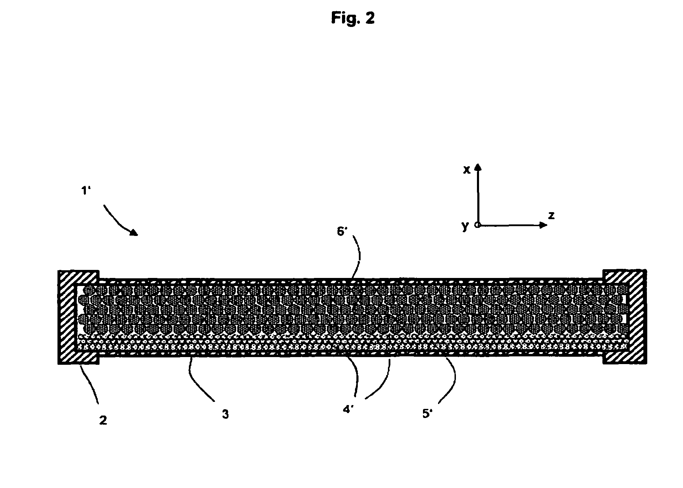

Fig. 2 shows a second embodiment of the device 1' according to the invention in a cross-section. This corresponds to the embodiment of Fig. 1 except for the arrangement of the catalytic device. The catalytic device 4' of the device 1' comprises a first layer 5' consisting of a microporous ceramic, which substantially contains hardly catalytically active ceramic, which, e.g. substantially comprises no TiO₂, WO₃, MoO₃ or V₂O₅, or at least only in lower mass fraction of, for example, less than 0.005, wherein the bulky components 5' of the first layer are densely packed ellipsoids of this ceramic. The first layer 5' is to be proximally arranged, i.e., facing the small heating system. Furthermore, the catalytic device 4' of the device 1' comprises a second layer 6, which comprises a microporous, catalytically active ceramic. Particularly due to inappropriate use, also the catalytic device 4' may be recovered by regeneration.

The catalytically active material of the catalytic device 4' is a microporous, technical ceramic (ceramics) by means of which an oxidation of compounds in the exhaust gas is catalyzable. The ceramic comprises as catalytically active material TiO₂ (mass fraction 0.75), WO₃ (mass fraction 0.05), V₂O₅ (mass fraction 0.03) and MoO₃ (0.02), as well as some further compounds. In particular, due to this arrangement, the emission of particulate matter can be reduced down to 5 mg/Nm³, the emission of small-chained organic compounds down to 2 mg/Nm³, and the emission of carbon monoxide down to 10 mg/Nm³. By means of the combination of several different materials in this first layer 5' and this second layer 6, the function of the system may be adapted to the typical exhaust gas conditions of a small heating system. Due to the porosity of the ceramic, and due to the adhesive properties associated therewith, non-oxidized solid compounds are adsorbed from the flue gas (exhaust gas), and are better oxidized due to the longer residence in the hotter, proximal zone of the first layer 5'. In one or more further regions, in particular regions or layers of the layer 6, which are arranged more distally, the catalytically active material is provided in the catalytic device, for example the mentioned TiO₂, WO₃, MoO₃ and V₂O₅. This material catalyzes the conversion of carbon monoxide to carbon dioxide, the cleavage of polyhalogenated dibenzodioxins and/or polyhalogenated dibenzofurans, and the oxidation thereof, the conversion of organic compounds, which may be contained in the exhaust gas, to carbon monoxide and carbon dioxide, the conversion of polycyclic aromatic hydrocarbons (PAKs) to carbon monoxide and carbon dioxide, and the conversion of polycyclic aromatic hydrocarbons (PAKs) to carbon monoxide and carbon dioxide. Since additionally the effect is given that particulate matter is significantly reduced by means of the catalytic device, an effective and cost-effective device comprising a catalytic device is generated, which may be used for treating exhaust gases, in particular for the reduction of the emission of a small heating system.

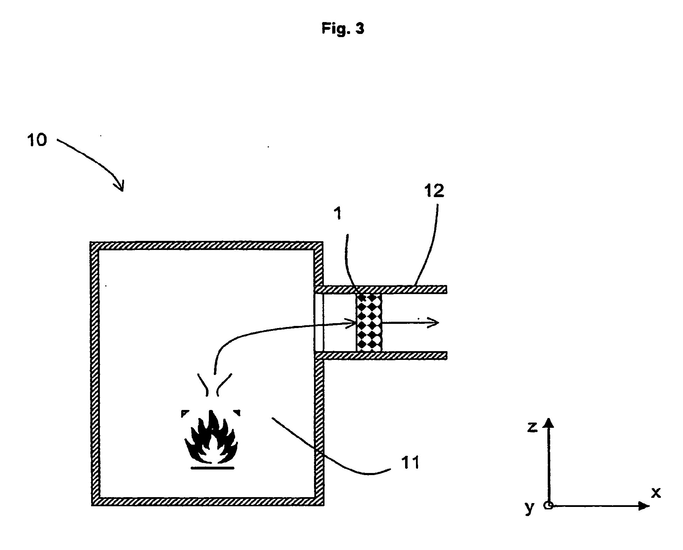

Fig. 3 shows a small heating system 10 in a schematical view. The small heating system 10 is a heating system for a single room according to BlmSchV from December 3, 2009 with a nominal heat output of 8 kW for a private household, which can be used for the heating of a room. The small heating system comprises a combustion chamber 11 and an exhaust gas duct 12, which receives the exhaust gas from the combustion chamber, and conducts it to a discharge duct, for example a chimney, and in which the device 1 or 11 is arranged such that it covers the cross-section of the duct 12 substantially completely such that the exhaust gases from the combustion of wood have to flow substantially completely through the device 1. The device is arranged such within the exhaust gas duct or the discharge duct, in particular arranged in a distance from the combustion chamber 11 such that the gas temperature of the exhaust gas, which reaches the device, is between 150°C and 800 °C. Therefore, an optimal temperature of the exhaust gases at the proximal side (in Fig. 3 left) of the device 1 is achieved such that an effective catalysis and filtering is effected.

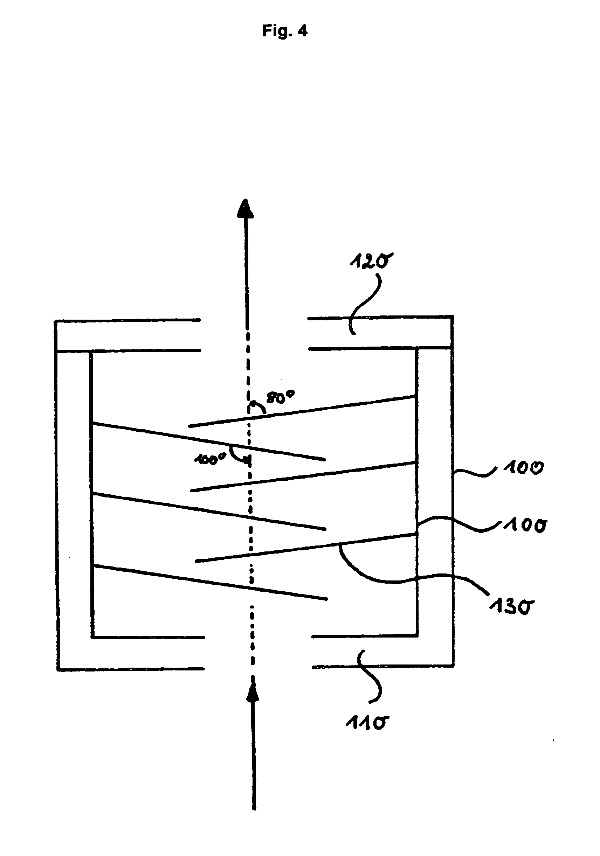

Fig. 4 shows an embodiment of the apparatus according to the invention. The apparatus is realized in the form of a cube. It comprises a housing 100, which is realized with two walls. It comprises a bottom 110 comprising an opening for entering exhaust gas from a small heating system, and a detachable cover 120 comprising an opening for exiting treated exhaust gas, which, for example, is guided to a chimney. Within the apparatus are devices 130 comprising catalytic devices, for example devices according to Figure 1 or 2. Said devices, are alternatingly arranged at opposing, lateral surfaces of the housing. The devices should have the form of a cassette. The devices on the right side of the apparatus enclose with the flow direction of the exhaust gas an angle of approximately 80°, the opposing devices on the left side an angle of approximately 100°.

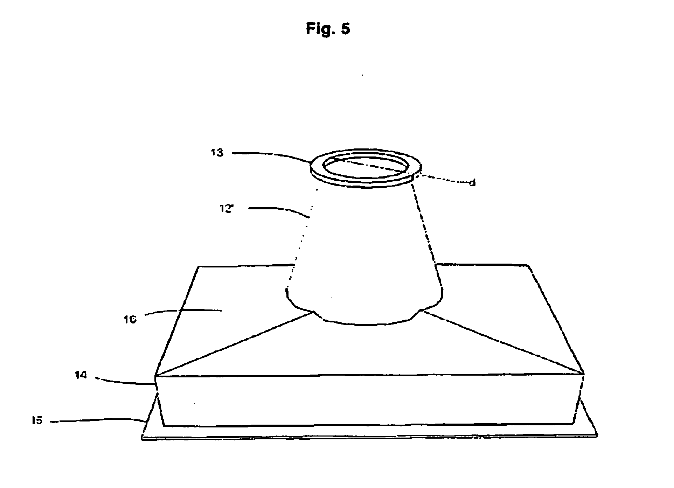

Figure 5 shows an embodiment of an exhaust gas duct 12' of a small heating system comprising the apparatus according to the invention comprising the housing 14 comprising cover 16 and bottom 15. The apparatus, in turn, comprises the device 1, 1' according to the invention. Shown is a part of an exhaust gas duct, which has to be distally arranged, for a small heating system, which is connected with its distal flange 13 to a discharge duct, for example a chimney. Integrated into the discharge duct 12', for example by integrated forming, welding, soldering, or by another form and force locking connection, is a cover 16 of the apparatus according to the invention. Preferably, in said arrangement, substantially the total exhaust gas flow flows through the apparatus. At the lateral section of the housing 14 of the apparatus, within the interior of the housing devices 1, 1' are mounted. The housing 14 is connectable via a bottom 15, which may be realized as flange, to the proximal part of the exhaust gas duct 12', which in turn is connected to the combustion chamber of the small heating system. The bottom / flange 15 can be connected to the opposing flange 15' (not shown) of the proximal portion. The proximal portion might also equally or similarly be realized as compared to the shown distal portion. Said portion 15 might also be differently formed. The cross-section of the devices is approximately 24 times as large as the cross-section of the exhaust gas duct 14, which, for example, is defined by the inner diameter d=250 mm of the flange section 13, preferably, however, by means of the smallest determined cross-section of the exhaust gas duct or the discharge duct. Thereby, the pressure drop, which is effected by means of the device, is reduced to 90 %, wherein a regular operation of the small heating system according to 1. BlmSchV is achieved.

The housing 14 is preferably realized such that it contains the device according to the invention in a form and force locking manner. The housing 14 comprises external wall sections parallel to the flow direction, which simply is assumed to be linear. The wall sections define a cuboid-like pipe section, which receives a substantially cuboid device. However, the wall sections may also define a differently formed pipe section, which receives a correspondingly differently shaped device. These wall sections might define, for example, a substantially hollow-cylindrical, hollow-truncated cone, or elsewise shaped pipe section, in which then a substantially hollow-cylindrical, hollow-truncated cone, or elsewise shaped pipe section is arranged.

A tapered, hollow-conic section connects the housing section to the distal section 12' of the discharge duct, which is connected to the chimney. This section might also be shaped differently. Preferably, the device is realized such that a cross-sectional area of the device, which is perpendicularly orientated with respect to the exhaust gas flow, is preferably larger by a factor than that of the exhaust gas duct or the discharge duct, for example the chimney, if the device or the apparatus or the small heating system is connected to an exhaust gas duct or discharge duct. The cross-sectional area of the device substantially corresponds to the cross-sectional area of the housing 14, perpendicular to the exhaust gas flow direction. The frame of the device, for example the frame 2, however, limits said cross-sectional area. The cross-sectional area is approximately 24 times as large as the cross-sectional area of the exhaust gas duct 14, which, for example, is defined by an internal diameter d = 250 mm of the flange section 13, however preferably by the smallest provided cross-sectional area of the exhaust gas duct or the discharge duct. Thereby, the pressure drop, which is effected by the device, is reduced by 90 %, wherein a low emission of pollutants and a proper operation of the small heating system according to the 1. BlmSchV is achieved.

The housing 14 is connectable via a flange 15 with the proximal portion of the exhaust gas duct 12', which is connected to the combustion chamber of the small heating system. The flange 15 can also be connected to a counterflange 15' (not shown) of the proximal portion. The proximal portion might be realized equally or similar as compared to the shown distal portion.

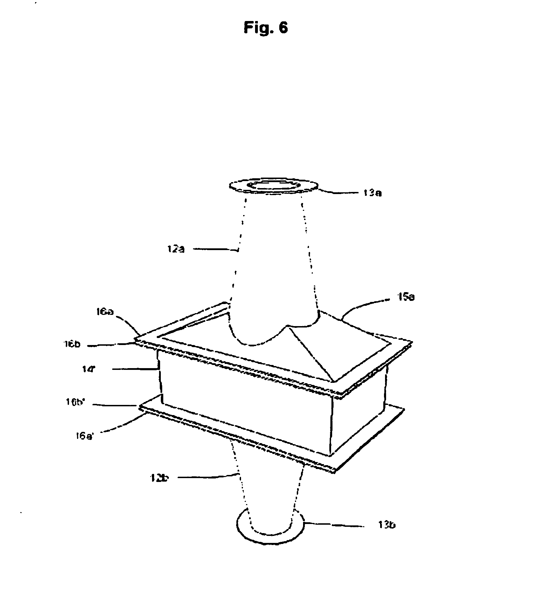

Figure 6 shows another embodiment of an exhaust gas duct of a small heating system, comprising the apparatus according to the invention, which comprises a housing 14', a cover 16a and a bottom 16b'. Said apparatus, in turn, comprises the device according to the invention. The exhaust gas duct comprises the distal section 12a and the proximal section 12b. The housing section 14' is usable via the two flange connections 16a, 16b and 16a' and 16b' in a gas-tight manner with the exhaust gas duct. Also here, the proximal and the distal portion are preferably realized similarly or equally. By means of said arrangement, the devices, in particular by said means (housing section 14, 14') for the arrangement of the devices within the exhaust gas duct and/or said means for changing the devices (flange connections 16a, 16b and 16a' and 16b'), may particularly easily be removed, and in particular the change of the devices, for replacement or for regeneration of the devices or the catalytic devices, can be comfortably effected.

## Claims

1. A device (1, 1', 130) for treating exhaust gases from a heating system, comprising:
a catalytic device (4, 4') comprising a catalytically active material,
wherein the catalytically active material is a ceramic by means of which an oxidation of exhaust compounds is catalyzable;
wherein the catalytic device (4, 4') comprises a plurality of apertures through which the exhaust gases may flow;
and
a supporting device for supporting the catalytic device (4, 4');
wherein the catalytic device (4, 4') comprises a fixed bed (5, 5');
**characterized in that** the supporting device comprises a frame (2) and an upper and lower grid-like plate (3), wherein said catalytic device (4, 4') comprising said fixed bed (5, 5') is arranged between the grid-like plates (3) and the frame (2).

2. The device (1,1', 130) according to claim 1, **characterized in that** said fixed bed (5, 5') comprises said catalytically active material; or
that said fixed bed (5, 5') comprises said catalytically active material, wherein the solid particles of the fixed bed have one or more predetermined external shapes, which are preferably selected from the group of shapes comprising or consisting of: rings, cylinders, cones, saddles, spheres, ellipsoids, cuboids, cubes, polyeders, plates, rods, or other shapes or cuts, or combinations of these shapes.

3. The device (1, 1', 130) according to any one of the preceding claims, **characterized in that** said ceramic is a technical ceramic and comprises one or more of the following: titanium oxide(s), tungsten oxide(s), molybdenum oxide(s), cordierite, corundum, in particular TiO₂. WO₃, MoO₃, ZrO₂, CeO_{2,} and/or Al₂O₃.

4. The device (1, 1', 130) according to any one of the preceding claims, **characterized in that** the catalytically active material comprises platinum and palladium, or platinum or palladium: or
that the catalytically active material comprises TiO₂ and V₂O₅; or
that the catalytically active material comprises TiO_{z} and V₂O₅, wherein the catalytically active material comprises a disordered anatase where less than 3.2 % or less than 2 % Ti⁴⁺ is replaced by V⁵⁺; or
that the catalytically active material comprises gold.

5. The device (1,1, 130) according to any one of the preceding claims, wherein the device is a small heating system (10) used in a private household.

6. An apparatus for treating exhaust gases from a small heating system (10), comprising:
a housing (14, 100) comprising a bottom (15, 110) and a cover (16, 120);
at least one device (1, 1', 130) as defined in any one of claims 1 to 5, which are arranged within the housing (14, 100) between said bottom (15, 110) and cover (16, 120);
wherein the bottom (15, 110) of the apparatus has an opening through which exhaust gas is fed from the small heating system (10) into the apparatus.

7. The apparatus according to claim 6, further comprising a flap for maintenance; or further comprising up to 10 of the devices (1, 1', 130) as defined in any one of claims 1 to 5; or comprising a flap for maintenance and up to 10 the devices (1, 1', 130) as defined in any one of claims 1 to 5.

8. The apparatus according to any one of claims 6 or 7, **characterized in that** said devices (1, 1', 130) are detachably attached at the housing wall; or that said devices (1, 1', 130) are alternatingly attached at two opposing surfaces of the housing (100); or that said devices (1, 1', 130) are detachably attached at the housing wall and that said devices (1, 1', 130) are alternatingly attached at two opposing surfaces of the housing (100).

9. The apparatus according to any one of claims 6 to 8, wherein the grid-like plates (3) are arranged such that they enclose an angle of from 60 to 90 ° or from 90 to 120 ° with the flow direction of the exhaust gas.

10. The apparatus according to any one of claims 6 to 9, **characterized in that** the apparatus comprises at least one absorbing device for absorbing one or more catalyst poisons; or
that said apparatus comprises at least one device for oxidizing one or more of the following: carbon monoxide, hydrocarbons, formaldehyde, dioxins, and/or furans; and/or at least one device for converting nitrogen oxides to nitrogen; and/or at least one device for removing mercury.

11. The apparatus according to any one of claims 6 to 10, **characterized in that** the apparatus is located in the interior of the small heating system (10).

12. A small heating system, comprising:
a combustion chamber;
an exhaust gas duct for guiding exhaust gases to a discharge duct; and
the device (1, 1', 130) as defined in any one of Claims 1 to 5; or the apparatus as defined in any one of claims 6 to 11;
**characterized in that** said device or said apparatus is/are arranged in the exhaust gas duct or the discharge duct (12') such that the gas temperature of the exhaust gas, which reaches said device (1, 1'. 130) or said apparatus, is from 150 °C to 800 °C, or from 180 °C to 600 °C, or from 180 °C to 450 °C.

13. The small heating system (10) according to claim 12, **characterized in that** it is operated with biomass selected from wood or wood pellets or crops or nutmegs; or with carbon selected from coal or brown coal; or with gas selected from natural gas, or biogas, or town gas.

14. A method of manufacturing a device (1, 1', 130) according to any one of claims 1 to 5, comprising the steps of:
- providing a supporting device for supporting a catalytic device (4, 4'), which comprises a catalytically active material, wherein the catalytically active material is a technical ceramic by means of which an oxidation of the exhaust gas compounds is catalyzable; and
- arranging the catalytically active material at the supporting device and providing the catalytic device (4, 4') such that the catalytic device (4, 4') comprises a plurality of apertures through which the exhaust gases may flow.

15. A method of regenerating the device (1, 1', 130) as defined in any one of claims 1 to 5, or a method of regenerating the apparatus as defined in any one of claims 6 to 11, comprising one or more of the following steps:
mechanically cleaning the catalytic device (4, 4') or the catalytically active material e.g. by means of an ultrasonic treatment; or by means of a solvent; or by treating with an agent for increasing the catalytic properties of the catalytically active material.

16. A method of treating the exhaust gases from a heating system, comprising a device (1, 1', 130) according to any one of the claims 1 to 5, or comprising an apparatus according to any one of claims 6 to 11, comprising:
arranging the device (1, 1', 130) or the apparatus in the exhaust gas flow.

17. Use of a device (1, 1', 130) according to any one of claims 1 to 5, for treating exhaust gases of a heating system.

18. Use of a device (1, 1', 130) according to claim 17, wherein the catalytically active material comprises platinum and palladium, or platinum or palladium, for oxidizing one or more of the following gases, which are contained in an exhaust gas from a heating system: carbon monoxide, hydrocarbons, formaldehyde, dioxins, furans, or wherein the catalytically active material comprises TiO₂ and V₂O₅, or wherein the catalytically active material comprises TiO₂ and V₂O₅, wherein the catalytically active material comprises a disordered anatase where less than 3.2 % or less than 2 % Ti⁴⁺ is replaced by V⁵⁺, for converting nitrogen oxides, which are contained in the exhaust gas from a heating system, to nitrogen, or wherein the catalytically active material comprises gold, for removing mercury, which is contained in the exhaust gas from a heating system.

19. Use of the apparatus according to any one of claims 6 to 11, for treating exhaust gases of a heating system.

20. Use of the apparatus according to claim 19, comprising the device according to claim 4, wherein the catalytically active material comprises platinum and palladium, or platinum or palladium, for oxidizing one or more of the following gases, which are contained in an exhaust gas from a heating system: carbon monoxide, hydrocarbons, formaldehyde, dioxins, furans, or wherein the catalytically active material comprises TiO₂ and V₂O₅, or wherein the catalytically active material comprises TiO₂ and V₂O₅, wherein the catalytically active material comprises a disordered anatase where less than 3.2 % or less than 2 % Ti⁴⁺ is replaced by V⁵⁺, for converting nitrogen oxides, which are contained in the exhaust gas from a heating system, to nitrogen, or wherein the catalytically active material comprises gold, for removing mercury, which is contained in the exhaust gas from a heating system.

## Patentansprüche

1. Vorrichtung (1, 1', 130) zum Behandeln von Abgasen aus einer Feuerungsanlage, aufweisend:
eine Katalysatorvorrichtung (4, 4') aufweisend ein katalytisch aktives Material,
wobei das katalytisch aktive Material eine Keramik ist, mit der eine Oxidation von Abgasstoffen katalysierbar ist;
wobei die Katalysatorvorrichtung (4, 4') eine Vielzahl von Öffnungen aufweist,
durch die die Abgase strömen können;
und
eine Haltevorrichtung zum Halten der Katalysatorvorrichtung (4, 4');
wobei die Katalysatorvorrichtung (4, 4') ein Festbett (5, 5') aufweist;
**dadurch gekennzeichnet, dass** die Haltevorrichtung einen Rahmen (2) und eine obere und eine untere Gitter-förmige Platte (3) aufweist, wobei besagte Katalysatorvorrichtung (4, 4'), welche besagtes Festbett (5, 5') aufweist, zwischen den Gitter-förmigen Platten (3) und dem Rahmen (2) angeordnet ist.

2. Vorrichtung (1, 1', 130) nach Anspruch 1, **dadurch gekennzeichnet, dass** besagtes Festbett (5, 5') besagtes katalytisch aktives Material aufweist; oder
dass besagtes Festbett (5, 5') besagtes katalytisch aktives Material aufweist, wobei die festen Partikel des Festbetts einen oder mehrere vorbestimmte äußere Formen aufweisen, welche vorzugsweise ausgewählt sind aus der Gruppe von Formen aufweisend oder bestehend aus: Ringe, Zylinder, Kegel, Sättel, Kugeln, Ellipsoide, Quader, Würfel, Polyeder, Plättchen, Stäbchen oder andere Formen oder Schnitte oder Kombinationen dieser Formen.

3. Vorrichtung (1, 1', 130) nach einem der vorstehenden Ansprüche, **dadurch gekennzeichnet, dass** besagte Keramik eine technische Keramik ist und eine oder mehrere der folgenden Verbindungen aufweist: Titanoxid(e), Wolframoxid(e), Molybdänoxid(e), Cordierit, Korund, insbesondere TiO₂, WO₃, MoO₃, ZrO₂, CeO₂ und/oder Al₂O₃.

4. Vorrichtung (1, 1', 130) nach einem der vorstehenden Ansprüche, **dadurch gekennzeichnet, dass** das katalytisch aktive Material Platin und Palladium aufweist oder Platin oder Palladium; oder
dass das katalytisch aktive Material TiO₂ und V₂O₅ aufweist; oder
dass das katalytisch aktive Material TiO₂ und V₂O₅ aufweist, wobei das katalytisch aktive Material einen fehlgeordneten Anatas aufweist, wobei weniger als 3,2 % oder weniger als 2 % Ti⁴⁺ durch V⁵⁺ ersetzt sind; oder
dass das katalytisch aktive Material Gold aufweist.

5. Vorrichtung (1, 1', 130) nach einem der vorstehenden Ansprüche, wobei die Vorrichtung eine Kleinfeuerungsanlage (10) ist, die in einem Privathaushalt verwendet wird.

6. Apparat zum Behandeln von Abgasen einer Kleinfeuerungsanlage (10), aufweisend:
ein Gehäuse (14, 100) aufweisend einen Boden (15, 110) und einen Deckel (16, 120);
mindestens eine Vorrichtung (1, 1', 130) wie in einem der Ansprüche 1 bis 5 definiert, welche innerhalb des Gehäuses (14, 100) zwischen besagtem Boden (15, 110) und Deckel (16, 120) angeordnet ist;
wobei der Boden (15, 110) der Vorrichtung eine Öffnung aufweist, durch welche Abgas aus der Kleinfeuerungsanlage (10) in die Vorrichtung geführt wird.

7. Apparat nach Anspruch 6, weiter aufweisend eine Wartungsklappe; oder
weiter aufweisend bis zu 10 der Vorrichtungen (1, 1', 130) wie in einem der Ansprüche 1 bis 5 definiert; oder
aufweisend eine Wartungsklappe und bis zu 10 der Vorrichtungen (1, 1', 130) wie in einem der Ansprüche 1 bis 5 definiert.

8. Apparat nach einem der Ansprüche 6 oder 7, **dadurch gekennzeichnet, dass** besagte Vorrichtungen (1, 1', 130) abnehmbar an der Gehäusewandung angebracht sind; oder
dass besagte Vorrichtungen (1, 1', 130) alternierend an zwei gegenüberliegenden Flächen des Gehäuses (100) angebracht sind; oder
dass besagte Vorrichtungen (1, 1' 130) abnehmbar an der Gehäusewandung angebracht sind, und dass besagte Vorrichtungen (1, 1', 130) alternierend an zwei gegenüberliegenden Flächen des Gehäuses (100) angebracht sind.

9. Apparat nach einem der Ansprüche 6 bis 8, wobei die Gitter-förmigen Platten (3) so angeordnet sind, dass sie einen Winkel von 60 bis 90° oder von 90 bis 120° mit der Strömungsrichtung des Abgases einschließen.

10. Apparat nach einem der Ansprüche 6 bis 9, **dadurch gekennzeichnet, dass** der Apparat mindestens eine absorbierende Vorrichtung zum Absorbieren eines oder mehrerer Katalysatorgifte aufweist; oder
dass besagter Apparat mindestens eine Vorrichtung zum Oxidieren einer oder mehrerer der folgenden Verbindungen aufweist: Kohlenmonoxid, Kohlenwasserstoffe, Formaldehyd, Dioxine und/oder Furane; und/oder mindestens eine Vorrichtung zum Umwandeln von Stickoxiden in Stickstoff; und/oder mindestens eine Vorrichtung zum Entfernen von Quecksilber.

11. Apparat nach einem der Ansprüche 6 bis 10, **dadurch gekennzeichnet, dass** der Apparat im Innern der Kleinfeuerungsanlage (10) lokalisiert ist.

12. Kleinfeuerungsanlage, aufweisend:
eine Verbrennungskammer;
einen Abgaskanal zum Leiten von Abgasen zu einer Abgabeleitung; und die Vorrichtung (1, 1', 130) wie in einem der Ansprüche 1 bis 5 definiert; oder den Apparat wie in einem der Ansprüche 6 bis 11 definiert;
**dadurch gekennzeichnet, dass** besagte Vorrichtung oder besagter Apparat im Abgaskanal oder dem Abgabekanal (12') so angeordnet ist/sind, dass die Gastemperatur des Abgases, welches besagte Vorrichtung (1, 1', 130) oder besagten Apparat erreicht, 150 °C bis 800 °C beträgt oder 180 °C bis 600 °C oder 180 °C bis 450 °C.

13. Kleinfeuerungsanlage (10) nach Anspruch 12, **dadurch gekennzeichnet, dass** sie mit Biomasse betrieben wird, ausgewählt aus Holz oder Holzpellets oder Getreide oder Muskatnüssen; oder mit Kohlenstoff, ausgewählt aus Steinkohle oder Braunkohle; oder mit Gas, ausgewählt aus Erdgas oder Biogas oder Stadtgas.

14. Verfahren zum Herstellen einer Vorrichtung (1, 1', 130) nach einem der Ansprüche 1 bis 5, aufweisend die Stufen:
Zurverfügungstellen einer Haltevorrichtung zum Halten einer Katalysatorvorrichtung (4, 4'), welche ein katalytisch aktives Material aufweist, wobei das katalytisch aktive Material eine technische Keramik ist, mit der eine Oxidation der Abgasverbindungen katalysierbar ist; und
Anordnen des katalytisch aktiven Materials an der Haltevorrichtung und Zurverfügungstellen der Katalysatorvorrichtung (4, 4') derart, dass die Katalysatorvorrichtung (4, 4') eine Vielzahl von Öffnungen aufweist, durch die das Abgas strömen kann.

15. Verfahren zum Regenerieren der Vorrichtung (1, 1', 130) wie in einem der Ansprüche 1 bis 5 definiert, oder Verfahren zum Regenerieren des Apparats wie in einem der Ansprüche 6 bis 11 definiert, aufweisend einen oder mehrere der folgenden Stufen:
Mechanisches Reinigen der Katalysatorvorrichtung (4, 4') oder des katalytisch aktiven Materials beispielsweise durch eine Ultraschallbehandlung; oder durch ein Lösungsmittel; oder durch Behandeln mit einem Wirkstoff zur Erhöhung der Katalyse-Eigenschaften des katalytisch aktiven Materials.

16. Verfahren zum Behandeln der Abgase aus einer Feuerungsanlage, aufweisend eine Vorrichtung (1, 1', 130) nach einem der Ansprüche 1 bis 5, oder aufweisend einen Apparat nach einem der Ansprüche 6 bis 11, aufweisend:
Anordnen der Vorrichtung (1, 1', 130) oder des Apparats im Abgasstrom.

17. Verwendung einer Vorrichtung (1, 1', 130) nach einem der Ansprüche 1 bis 5 zum Behandeln von Abgasen einer Feuerungsanlage.

18. Verwendung einer Vorrichtung (1, 1', 130) nach Anspruch 17, wobei das katalytisch aktive Material Platin und Palladium oder Platin oder Palladium aufweist zum Oxidieren eines oder mehrerer der folgenden Gase, welche in einem Abgas aus einer Feuerungsanlage enthalten sind: Kohlenmonoxid, Kohlenwasserstoffe, Formaldehyd, Doxine, Furane, oder wobei das katalytisch aktive Material TiO₂ und V₂O₅ aufweist, oder wobei das katalytisch aktive Material TiO₂ und V₂O₅ aufweist, wobei das katalytisch aktive Material einen fehlgeordneten Anatas aufweist, in welchem weniger als 3,2 % oder weniger als 2 % Ti⁴⁺ durch V⁵⁺ ersetzt sind, zum Umwandeln von Stickoxiden, welche im Abgas aus einer Feuerungsanlage enthalten sind, in Stickstoff, oder wobei das katalytisch aktive Material Gold aufweist zum Entfernen von Quecksilber, welches im Abgas aus einer Feuerungsanlage enthalten ist.

19. Verwendung des Apparats nach einem der Ansprüche 6 bis 11 zum Behandeln von Abgasen einer Feuerungsanlage.

20. Verwendung eines Apparats nach Anspruch 19, aufweisend die Vorrichtung nach Anspruch 4, wobei das katalytisch aktive Material Platin und Palladium oder Platin oder Palladium aufweist, zum Oxidieren eines oder mehrerer der folgenden Gase, welche im Abgas aus einer Feuerungsanlage enthalten sind: Kohlenmonoxid, Kohlenwasserstoffe, Formaldehyd, Dioxine, Furane, oder wobei das katalytisch aktive Material TiO₂ und V₂O₅ aufweist, oder wobei das katalytisch aktive Material TiO₂ und V₂O₅ aufweist, wobei das katalytisch aktive Material einen fehlgeordneten Anatas aufweist, in welchem weniger als 3,2 % oder weniger als 2 % Ti⁴⁺ durch V⁵⁺ ersetzt sind, zum Umwandeln von Stickoxiden, welche im Abgas aus einer Feuerungsanlage enthalten sind, in Stickstoff, oder wobei das katalytisch aktive Material Gold aufweist zum Entfernen von Quecksilber, welches im Abgas aus einer Feuerungsanlage enthalten ist.

## Revendications

1. Dispositif (1, 1', 130) de traitement des gaz d'échappement d'un système de chauffage, comprenant :
un dispositif catalytique (4, 4') comprenant un matériau catalytiquement actif,
dans lequel le matériau catalytiquement actif est une céramique au moyen de laquelle une oxydation des composés d'échappement peut être catalysée ;
dans lequel le dispositif catalytique (4, 4') comprend une pluralité d'ouvertures à travers lesquelles les gaz d'échappement peuvent s'écouler ;
et
un dispositif de support permettant de supporter le dispositif catalytique (4, 4') ;
dans lequel le dispositif catalytique (4, 4') comprend un lit fixe (5, 5') ;
**caractérisé en ce que** le dispositif de support comprend un cadre (2) et une plaque en forme de grille supérieure et inférieure (3), dans lequel ledit dispositif catalytique (4, 4') comprenant ledit lit fixe (5, 5') est agencé entre les plaques en forme de grille (3) et le cadre (2).

2. Dispositif (1, 1', 130) selon la revendication 1, **caractérisé**
**en ce que** ledit lit fixe (5, 5') comprend ledit matériau catalytiquement actif ; ou
**en ce que** ledit lit fixe (5, 5') comprend ledit matériau catalytiquement actif, dans lequel les particules solides du lit fixe ont une ou plusieurs formes externes prédéterminées, qui sont de préférence choisies dans le groupe de formes comprenant ou consistant en : des anneaux, des cylindres, des cônes, des selles, des sphères, des ellipsoïdes, des cuboïdes, des cubes, des polyèdres, des plaques, des tiges ou d'autres formes ou découpes, ou combinaisons de ces formes.

3. Dispositif (1, 1', 130) selon l'une quelconque des revendications précédentes, **caractérisé en ce que** ladite céramique est une céramique technique et comprend un ou plusieurs des éléments suivantes : oxyde(s) de titane, oxyde(s) de tungstène, oxyde(s) de molybdène, cordiérite, corindon, en particulier TiO₂, WO₃, MoO₃, ZrO₂, CeO₂ et/ou Al₂O₃.

4. Dispositif (1, 1', 130) selon l'une quelconque des revendications précédentes, **caractérisé en ce que** le matériau catalytiquement actif comprend du platine et du palladium, ou du platine ou du palladium ; ou
**en ce que** le matériau catalytiquement actif comprend du TiO₂ et du V₂O₅ ; ou
**en ce que** le matériau catalytiquement actif comprend du TiO₂ et du V₂O₅, dans lequel le matériau catalytiquement actif comprend une anatase désordonnée où moins de 3,2% ou moins de 2% de Ti⁴⁺ est remplacé par du V⁵⁺ ; ou
**en ce que** le matériau catalytiquement actif comprend de l'or.

5. Dispositif (1, 1', 130) selon l'une quelconque des revendications précédentes, dans lequel le dispositif est un petit système de chauffage (10) utilisé dans un foyer privé.

6. Appareil de traitement des gaz d'échappement d'un petit système de chauffage (10), comprenant :
un logement (14, 100) comprenant un fond (15, 110) et un couvercle (16, 120) ;
au moins un dispositif (1, 1', 130) tel que défini dans l'une quelconque des revendications 1 à 5, qui est agencé à l'intérieur du logement (14, 100) entre lesdits fond (15, 110) et couvercle (16, 120) ;
dans lequel le fond (15, 110) de l'appareil a une ouverture à travers laquelle l'appareil est alimenté en gaz d'échappement à partir du petit système de chauffage (10).

7. Appareil selon la revendication 6, comprenant en outre un rabat pour l'entretien ; ou comprenant en outre jusqu'à 10 des dispositifs (1, 1', 130) tels que définis dans l'une quelconque des revendications 1 à 5 ; ou comprenant un rabat pour l'entretien et jusqu'à 10 des dispositifs (1, 1', 130) tels que définis dans l'une quelconque des revendications 1 à 5.

8. Appareil selon l'une quelconque des revendications 6 et 7, **caractérisé en ce que** lesdits dispositifs (1, 1', 130) sont attachés de façon amovible à la paroi du logement ; ou **en ce que** lesdits dispositifs (1, 1', 130) sont attachés de façon alternée à deux surfaces opposées du logement (100) ; ou **en ce que** lesdits dispositifs (1, 1', 130) sont attachés de façon amovible à la paroi du logement et **en ce que** lesdits dispositifs (1, 1', 130) sont attachés de façon alternée à deux surfaces opposées du logement (100).

9. Appareil selon l'une quelconque des revendications 6 à 8, dans lequel les plaques en forme de grille (3) sont agencées de telle sorte qu'elles forment un angle de 60 à 90° ou de 90 à 120° avec la direction d'écoulement du gaz d'échappement.

10. Appareil selon l'une quelconque des revendications 6 à 9, **caractérisé en ce que** l'appareil comprend au moins un dispositif d'absorption pour absorber un ou plusieurs poisons de catalyseur ; ou
**en ce que** ledit appareil comprend au moins un dispositif pour oxyder un ou plusieurs des éléments suivants : monoxyde de carbone, hydrocarbures, formaldéhyde, dioxines et/ou furanes ; et/ou au moins un dispositif pour convertir les oxydes d'azote en azote ; et/ou au moins un dispositif pour retirer le mercure.

11. Appareil selon l'une quelconque des revendications 6 à 10, **caractérisé en ce que** l'appareil est situé à l'intérieur du petit système de chauffage (10).

12. Petit système de chauffage, comprenant :
une chambre de combustion ;
une conduite d'échappement de gaz permettant de guider les gaz d'échappement vers une conduite d'évacuation ; et
le dispositif (1, 1', 130) tel que défini dans l'une quelconque des revendications 1 à 5 ; ou l'appareil tel que défini dans l'une quelconque des revendications 6 à 11 ;
**caractérisé en ce que** ledit dispositif ou ledit appareil est agencé dans la conduite de gaz d'échappement ou la conduite d'évacuation (12') de sorte que la température de gaz du gaz d'échappement, qui atteint ledit dispositif (1, 1', 130) ou ledit appareil, est de 150°C à 800°C, ou de 180°C à 600°C, ou de 180°C à 450°C.

13. Petit système de chauffage selon la revendication 12, **caractérisé en ce qu'**il fonctionne avec une biomasse choisie parmi du bois ou des granules de bois, des cultures ou des muscades ; ou avec du carbone choisi parmi du charbon ou de la lignite ; ou avec un gaz choisi parmi du gaz naturel ou du biogaz ou du gaz de ville.

14. Procédé de fabrication d'un dispositif (1, 1', 130) tel que défini dans l'une quelconque des revendications 1 à 5, comprenant les étapes :
- de fourniture d'un dispositif de support permettant de supporter un dispositif catalytique (4, 4'), qui comprend un matériau catalytiquement actif, dans lequel le matériau catalytiquement actif est une céramique technique au moyen de laquelle une oxydation des composés de gaz d'échappement peut être catalysée ; et
- d'agencement du matériau catalytiquement actif au niveau du dispositif de support et de fourniture du dispositif catalytique (4, 4') de sorte que le dispositif catalytique (4, 4') comprend une pluralité d'appareils à travers lesquels le gaz d'échappement peut s'écouler.

15. Procédé de régénération du dispositif (1, 1', 130) tel que défini dans l'une quelconque des revendications 1 à 5, ou procédé de régénération de l'appareil tel que défini dans l'une quelconque des revendications 6 à 11, comprenant une ou plusieurs des étapes suivantes :
nettoyage mécanique du dispositif catalytique (4, 4') ou du matériau catalytiquement actif par exemple au moyen d'un traitement ultrasonique ; ou au moyen d'un solvant ; ou par traitement avec un agent afin d'augmenter les propriétés catalytiques du matériau catalytiquement actif.

16. Procédé de traitement des gaz d'échappement en provenance d'un système de chauffage, comprenant un dispositif (1, 1', 130) selon l'une quelconque des revendications 1 à 5, ou comprenant un appareil selon l'une quelconque des revendications 6 à 11, comprenant :
l'agencement du dispositif (1, 1', 130) ou de l'appareil dans l'écoulement du gaz d'échappement.

17. Utilisation d'un dispositif (1, 1', 130) selon l'une quelconque des revendications 1 à 5, pour le traitement des gaz d'échappement d'un système de chauffage.

18. Utilisation d'un dispositif (1, 1', 130) selon la revendication 17, dans laquelle le matériau catalytiquement actif comprend du platine et du palladium, ou du platine ou du palladium, afin d'oxyder un ou plusieurs des gaz suivants, qui sont contenus dans un gaz d'échappement en provenance d'un système de chauffage : monoxyde de carbone, hydrocarbures, formaldéhyde, dioxines, furanes, ou dans lequel le matériau catalytiquement actif comprend du TiO₂ et du V₂O₅, ou dans lequel le matériau catalytiquement actif comprend du TiO₂ et du V₂O₅, dans lequel le matériau catalytiquement actif comprend une anatase désordonnée où moins de 3,2% ou moins de 2% de Ti⁴⁺ est remplacé par du V⁵⁺, afin de convertir les oxydes d'azote, qui sont contenus dans le gaz d'échappement en provenance d'un système de chauffage, en azote, ou dans lequel le matériau catalytiquement actif comprend de l'or, pour retirer le mercure, qui est contenu dans le gaz d'échappement en provenance d'un système de chauffage.

19. Utilisation de l'appareil selon l'une quelconque des revendications 6 à 11, pour le traitement des gaz d'échappement d'un système de chauffage.

20. Utilisation de l'appareil selon la revendication 19, comprenant le dispositif selon la revendication 4, dans laquelle le matériau catalytiquement actif comprend du platine et du palladium, ou du platine ou du palladium, afin d'oxyder un ou plusieurs des gaz suivants, qui sont contenus dans un gaz d'échappement en provenance d'un système de chauffage : monoxyde de carbone, hydrocarbures, formaldéhyde, dioxines, furanes, ou dans lequel le matériau catalytiquement actif comprend du TiO₂ et du V₂O₅, ou dans lequel le matériau catalytiquement actif comprend du TiO₂ et du V₂O₅, dans lequel le matériau catalytiquement actif comprend une anatase désordonnée où moins de 3,2% ou moins de 2% de Ti⁴⁺ est remplacé par du V⁵⁺, afin de convertir les oxydes d'azote, qui sont contenus dans le gaz d'échappement en provenance d'un système de chauffage, en azote, ou dans lequel le matériau catalytiquement actif comprend de l'or, pour retirer le mercure, qui est contenu dans le gaz d'échappement en provenance d'un système de chauffage.
